(19) Europäisches Patentamt
European Patent Office
Office européen des brevets

(11) **EP 4 177 649 B1**

(12) **EUROPEAN PATENT SPECIFICATION**

(45) Date of publication and mention
of the grant of the patent:
**13.05.2026 Bulletin 2026/20**

(21) Application number: **22205257.3**

(22) Date of filing: **03.11.2022**

(51) International Patent Classification (IPC):
*G02B 6/132* (2006.01)     *G02B 6/12* (2006.01)
*G02B 6/122* (2006.01)     *F21V 8/00* (2006.01)

(52) Cooperative Patent Classification (CPC):
**G02B 6/0076**; G02B 6/122; G02B 6/132;
G02B 2006/12061; G02B 2006/12142

(54) **PHOTONIC WAVEGUIDE STRUCTURE**

PHOTONISCHE WELLENLEITERSTRUKTUR

STRUCTURE DE GUIDE D'ONDES PHOTONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.11.2021 US 202163263595 P
26.10.2022 US 202217973774**

(43) Date of publication of application:
**10.05.2023 Bulletin 2023/19**

(73) Proprietor: **Viavi Solutions Inc.
Chandler, AZ 85286 (US)**

(72) Inventor: **HOUCK, William D.
Santa Rosa, 95404 (US)**

(74) Representative: **Murgitroyd & Company
165-169 Scotland Street
Glasgow G5 8PL (GB)**

(56) References cited:
CN-A- 105 044 844    US-A1- 2007 116 419
US-A1- 2020 026 000    US-B1- 11 092 740

• **CLEMENS J KR\"UCKEL ET AL: "Optical
bandgap engineering in nonlinear silicon nitride
waveguides", ARXIV.ORG, CORNELL
UNIVERSITY LIBRARY, 201 OLIN LIBRARY
CORNELL UNIVERSITY ITHACA, NY 14853, 16
March 2017 (2017-03-16), XP080757460**
• **HUGO DUPONT: "Low loss Silicon Nitride
Waveguides for Photonic Integrated Circuits",
THESIS, 20 March 2019 (2019-03-20), University
of California, Berkeley, XP055708217, Retrieved
from the Internet <URL:https://www.
researchgate.net/publication/332551278_Low_lo
ss_Silicon_Nitride_Waveguides_for_Photonic_I
ntegrated_Circuits> [retrieved on 20200624],
DOI: 10.13140/RG.2.2.14103.21923**
• **MELCHIORRI M ET AL: "Propagation losses of
silicon nitride waveguides in the near-infrared
range", APPLIED PHYSICS LETTERS,
AMERICAN INSTITUTE OF PHYSICS, 2
HUNTINGTON QUADRANGLE, MELVILLE, NY
11747, vol. 86, no. 12, 16 March 2005
(2005-03-16), pages 121111 - 121111,
XP012064694, ISSN: 0003-6951, DOI: 10.1063/
1.1889242**
• **LIU HAI-YING ET AL: "Self-induced Anderson
localization and optical limiting in photonic
crystal coupled cavity waveguides with Kerr
nonlinearity", APPLIED PHYSICS LETTERS,
AMERICAN INSTITUTE OF PHYSICS, 2
HUNTINGTON QUADRANGLE, MELVILLE, NY
11747, vol. 90, no. 21, 23 May 2007 (2007-05-23),
pages 213507 - 213507, XP012094993, ISSN:
0003-6951, DOI: 10.1063/1.2742595**
• **WU JIAYANG ET AL: "Enhanced four-wave
mixing in hybrid integrated waveguides with
graphene oxide", SPIE PROCEEDINGS;
[PROCEEDINGS OF SPIE ISSN 0277-786X], SPIE,
US, vol. 10920, 27 February 2019 (2019-02-27),
pages 109200K - 109200K, XP060117851, ISBN:
978-1-5106-3673-6, DOI: 10.1117/12.2508120**

## Description

BACKGROUND

Integrated photonics is a branch of photonics in which waveguides and other photonic devices are fabricated as an integrated structure on a substrate surface. For example, a photonic integrated circuit (PIC) may use semiconductor-grade materials (e.g., silicon, indium phosphide, dielectrics such as silicon dioxide or silicon nitride, and/or the like) as a platform to integrate active and passive photonic circuits with electronic components on a single chip. As a result of integration, complex photonic circuits can process and transmit light (e.g., photons) in similar ways to how electronic integrated circuits process and transmit electrons.

US 2020/026000 A1 describes a vertically arranged optical structure including waveguide pairs, dielectric regions, and electrode layers, configured to achieve phase modulation via the Kerr effect or plasma dispersion effect in silicon.

SUMMARY

The invention is defined in the claims.

BRIEF DESCRIPTION OF THE DRAWINGS

Fig. 1 is a diagram of an example optical device described herein.
Fig. 2 shows a table of some optical characteristics of example materials of an active structure of a photonic waveguide layer described herein.

DETAILED DESCRIPTION

The following detailed description of example implementations refers to the accompanying drawings. The same reference numbers in different drawings may identify the same or similar elements.

When a PIC is formed, space (e.g., between components) is often limited. For example, components of the PIC are typically created in a single layer on a wafer, which limits a total number of components that can be created on the wafer. As another example, some components in a first layer can comprise materials that are sensitive to high temperatures (e.g., greater than 300 degrees Celsius (C)), and therefore can be damaged when a second layer disposed on the first layer requires a high temperature deposition process. Damage to components of the first layer can affect an optical behavior of the first layer and/or of the PIC. Further, designing a PIC to avoid high temperature processing issues affects an order and/or number of material combinations that can be used in the PIC.

Some implementations described herein provide a photonic waveguide structure (e.g., that is a type of a photonic transmission structure) that vertically integrates a plurality of photonic waveguide layers (e.g., at least a threshold number, such as four, photonic waveguide layers disposed in a stack configuration). In this way, the photonic waveguide structure may be capable of both linear optical operations and nonlinear optical operations. For example, the photonic waveguide structure may include a first photonic waveguide layer that includes a first active structure associated with one or more particular nonlinear optical characteristics (e.g., that permit the photonic waveguide structure to perform one or more nonlinear optical operations), and may include a second photonic waveguide layer that includes a second active structure associated with one or more particular linear optical characteristics (e.g., that permit the photonic waveguide structure to perform one or more linear optical operations). Vertical integration of the plurality of photonic waveguide layers in the photonic waveguide structure allows for integration of multiple materials, within the photonic transmission structure, in any order and in multiple photonic waveguide layers. This enables the photonic waveguide structure to provide linear optical operations and nonlinear optical operations that are not possible with a single-layer PIC.

In some implementations, various formation techniques may be used to vertically integrate materials in the photonic waveguide structure. For example, one or more sputtering processes may be used to form the plurality of photonic waveguide layers of the photonic waveguide structure. A processing temperature associated with the one or more sputtering processes may be low (e.g., less than or equal to 300 degrees Celsius (°C)), and therefore the one or more sputtering processes are less likely to damage the plurality of photonic waveguide layers than would otherwise be possible using conventional deposition processes with high processing temperatures (e.g., greater than 300°C, and typically greater than 500°C). In this way, a photonic waveguide structure may be formed that could not otherwise be formed using a conventional deposition process (e.g., because of high operating temperatures that would damage at least one of the plurality of photonic waveguide layers in the stack configuration).

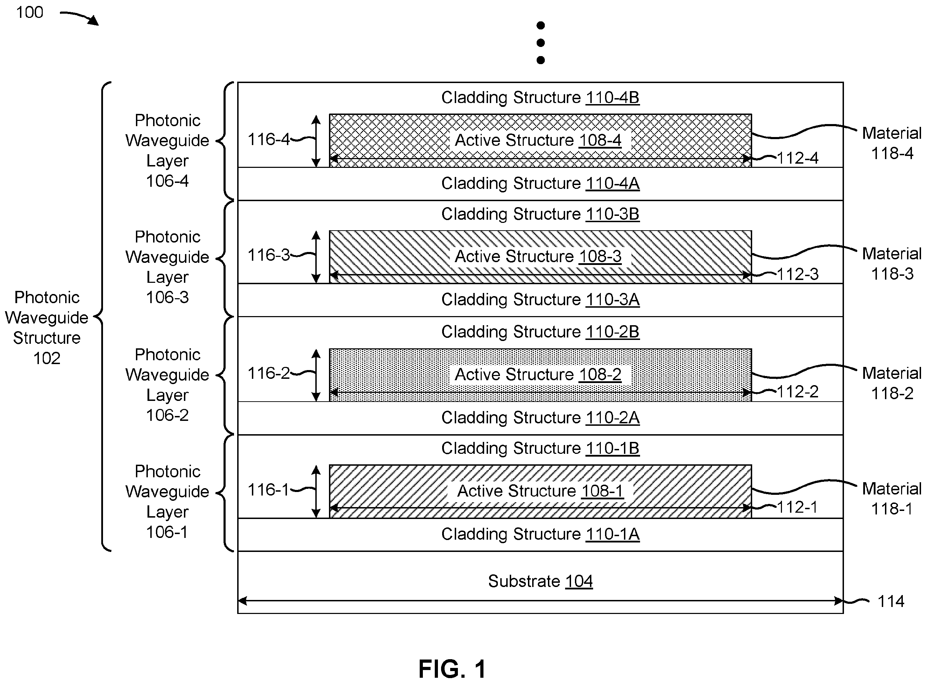

Fig. 1 is a diagram of an example optical device 100 described herein. An optical device may be, for example, a PIC (e.g., that is capable of one or more linear optical operations and/or one or more nonlinear optical operations) or a similar optical device. The optical device 100 may include a photonic transmission structure, such as a photonic waveguide structure 102 shown in Fig. 1, disposed on a substrate 104. As further shown in Fig. 1, the photonic waveguide structure 102 may include a plurality of photonic waveguide layers 106 (shown as photonic waveguide layers 106-1 through 106-4). While implementations described herein are directed to a photonic waveguide structure that includes photonic waveguide layers, contemplated implementations also include any photonic transmission structure that includes photonic transmission layers that can be used in association with linear optics and/or nonlinear optics.

The substrate 104 may include a substrate upon which other layers and/or structures shown in Fig. 1 are formed. The substrate 104 may be a transmissive substrate, such as a glass substrate, a silicon (Si) substrate, or a germanium (Ge) substrate. In some implementations, the substrate 104 may have a refraction index that satisfies (e.g., is less than or equal to) a refraction index threshold. For example, the refraction index threshold may be less than or equal to 1.6.

In some implementations, the plurality of photonic waveguide layers 106 may be disposed in a stack configuration (e.g., over the substrate 104). For example, the photonic waveguide layer 106-1 may be disposed over the substrate 104, the photonic waveguide layer 106-2 may be disposed over the photonic waveguide layer 106-1, the photonic waveguide layer 106-3 may be disposed over the photonic waveguide layer 106-2, the photonic waveguide layer 106-4 may be disposed over the photonic waveguide layer 106-3, and so on. In this way, the plurality of photonic waveguide layers 106 may be said to be "vertically integrated" (e.g., vertically stacked over the substrate 104, as shown in Fig. 1). In some implementations, when a photonic waveguide layer 106 is disposed over the substrate 104 or another photonic waveguide layer 106, the photonic waveguide layer 106 may be directly disposed on the substrate 104 or the other photonic waveguide layer 106, or, alternatively, may be disposed on one or more other layers or structures that are disposed between the photonic waveguide layer 106 and the substrate 104 or the other photonic waveguide layer 106.

In some implementations, a number (e.g., a quantity) of the plurality of photonic waveguide layers 106 may satisfy a layer number threshold. That is, the number of the plurality of photonic waveguide layers 106 (e.g., that are disposed in the stack configuration) may be greater than or equal to the layer number threshold. The layer number threshold may be greater than or equal to two, three, four, five, and/or six, among other examples. For example, as shown in Fig. 1, at least four of the photonic waveguide layers 106 (photonic waveguide layers 106-1 through 106-4) may be disposed in the stack configuration.

Each photonic waveguide layer 106 may include an active structure 108 and one or more cladding structures 110. For example, as shown in Fig. 1, the photonic waveguide layer 106-1 may include the active structure 108-1, the cladding structure 110-1A, and the cladding structure 110-1B; the photonic waveguide layer 106-1 may include the active structure 108-2, the cladding structure 110-2A, and the cladding structure 110-2B; and so on. The active structure 108 may be configured to transmit light (e.g., as a waveguide). The one or more cladding structures 110 may be configured to confine light (e.g., within the active structure 108).

Within each photonic waveguide layer 106, the active structure 108 may disposed over a cladding structure 110 of the one or more cladding structures 110. For example, as shown in Fig. 1, the active structure 108-1 may be disposed over the cladding structure 110-1A, such that the active structure 108-1 is disposed directly on a surface (e.g., a top surface) of the cladding structure 110-1A, or, alternatively, disposed on one or more intervening layers or structures between the active structure 108-1 and the cladding structure 110-1A. In some implementations, the active structure 108 may not be disposed over a cladding structure 110 within the photonic waveguide layer 106. For example, the active structure 108 may be disposed on (e.g., directly on, or, alternatively, indirectly on, via one or more intervening layers or structures) the substrate 104 or another photonic waveguide layer 106 (e.g., upon which the photonic waveguide layer 106 is disposed). For example, in relation to Fig. 1, the active structure 108-1 may be disposed directly on the substrate 104 (e.g., when the cladding structure 110-1A is not present) and/or the active structure 108-2 may be disposed directly on the photonic waveguide layer 106-1 (e.g., when the cladding structure 110-2A is not present).

The active structure 108 of each photonic waveguide layer 106 may comprise a planar structure that has a width 112 (e.g., shown as widths 112-1 through 112-4 in Fig. 1), which may be less than or equal to a width 114 of the substrate 104. In some implementations, each active structure 108 may have a thickness 116 (e.g., shown as thicknesses 116-1 through 116-4). In some implementations, the thickness 116 may be within a thickness range from 100 nanometers (nm) to 2000 nm (e.g., greater than or equal to 100 nm and less than or equal to 2000 nm). Additionally, or alternatively, the thickness 116 may satisfy (e.g., may be greater than or equal to) a thickness threshold. For example, each of the thicknesses 116-1 through 116-4 shown in Fig. 1 may be greater than or equal to the thickness threshold. The thickness threshold may be greater than or equal to 500 nm, 600 nm, 700 nm, 750 nm, 850 nm, and/or 1000 nm, among other examples. In some implementations, the thickness 116 may be substantially uniform. For example, the thickness 116 may vary less than a percentage threshold across a surface of the active structure 108 (e.g., a top surface of the active structure 108). For example, each of the thicknesses 116-1 through 116-4 shown in Fig. 1 may vary less than the percentage threshold. The percentage threshold may be less than or equal to 1%, 2%, 3%, and/or 5%, among other examples.

While Fig. 1 shows the respective widths 112 (e.g., widths 112-1 through 112-4) of the active structures 108 (e.g., active structures 108-1 through 108-4) as the same, or similar, to each other, and the respective thicknesses 116 (e.g., thicknesses 116-1 through 116-4) of the active structures 108, as the same, or similar, to each other, each active structure 108 may have a particular width 112 and a particular thickness 116 (e.g., that is the same as, or different than, that of another active structure 108). For example, the active structure 108-3 may have a width 112-3 that is the same as (e.g., equal to, within a tolerance which may be less than or equal to 1 nm, 2 nm, 3 nm, 5 nm, and/or 10 nm) the width 112-4 of the active structure 108-4, and different than the widths 112-1 and 112-2 of the active structures 108-1 and 108-2. As another example, the active structure 108-3 may have a thickness 116-3 that is different than the thicknesses 116-1, 116-2, and 116-4 of the active structures 108-1, 108-2, and 108-4.

Within each photonic waveguide layer 106, a cladding structure 110, of the one or more cladding structures 110, may be disposed over the active structure 108. For example, as shown in Fig. 1, the cladding structure 110-1B may be disposed over the active structure 108-1, such that the cladding structure 110-1B is disposed directly on a surface (e.g., a top surface) of the active structure 108-1, or, alternatively, disposed on one or more intervening layers or structures between the cladding structure 110-1B and the active structure 108-1. In some implementations, such as when the width 112 of the active structure 108 is less than the width 114 of the substrate 104, the cladding structure 110 also may be disposed on one or more portions of a surface of another cladding structure 110 over which the active structure 108 is disposed (e.g., on one or more portions of a top surface of the other cladding structure 110). For example, as shown in Fig. 1, the cladding structure 110-1B may be disposed on one or more portions of a surface of the cladding structure 110-1A. Alternatively, when the photonic waveguide layer 106 does not include another cladding structure 110, the cladding structure 110 may be disposed on one or more portions of a surface of the substrate 104 (e.g., a top surface of the substrate 104) or one or more portions of a surface of another photonic waveguide layer 106. For example, in relation to Fig. 1, the cladding structure 110-1B may be disposed directly on one or more portions of the substrate 104 (e.g., when the cladding structure 110-1A is not present) and/or the cladding structure 110-2B may be disposed directly on the photonic waveguide layer 106-1 (e.g., when the cladding structure 110-2A is not present).

Each cladding structure 110 may comprise at least an oxide. For example, each cladding structure 110 may include an oxide material (e.g., a silicon dioxide ($SiO_2$) material) and, in some implementations, one or more other elements or materials (e.g., silicon, oxygen, and/or other materials). Additionally, or alternatively, each cladding structure 110 may comprise at least a polymer material (e.g., at least a siloxane polymer material or another polymer material) or at least an air cladding, among other examples.

Each active structure 108 may comprise a material 118. For example, as shown in Fig. 1, the active structure 108-1 may comprise a material 118-1, the active structure 108-2 may comprise a material 118-2, and so on. In some implementations, each material 118 may comprise at least a non-alkali, oxide solution that includes a cation that is niobium. The non-alkali, oxide solution that includes a cation that is niobium may include at least one of a non-alkali, binary oxide solution that includes a cation that is niobium; a non-alkali, ternary oxide solution that includes a cation that is niobium; a non-alkali, quaternary oxide solution that includes a cation that is niobium; or a non-alkali, quinary oxide solution that includes a cation that is niobium (and so on). For example, the material 118 may include at least one of a niobium tantalum oxide solution, a niobium titanium oxide solution, or a niobium tantalum titanium oxide solution. As another example, the material 118 may include at least one of a niobium aluminum oxide solution, a niobium strontium oxide solution, a niobium aluminum strontium oxide solution, a niobium tantalum aluminum oxide solution, a niobium titanium aluminum oxide solution, a niobium tantalum strontium solution, a niobium titanium strontium oxide solution, a niobium titanium tantalum aluminum oxide solution, a niobium titanium tantalum strontium oxide solution, a niobium titanium aluminum strontium oxide solution, a niobium tantalum aluminum strontium oxide solution, or a niobium titanium tantalum aluminum strontium oxide solution. In some implementations, the material 118 may comprise at least one of a non-alkali, oxide solution that includes a cation that is niobium, a deuterated silicon oxynitride (SiON:D) material, a silicon nitride ($Si_3N_4$) material, an ultra-silicon-rich nitride ($USRN:Si_7N_3$) material, a tantalum pentoxide ($Ta_2O_5$) material, an arsenic trisulfide ($As_2S_3$) material, a titanium dioxide ($TiO_2$) material, an aluminum gallium arsenide (AlGaAs) material, a crystalline silicon (c-Si) material, an amorphous silicon (a-Si) material, a hydrogenated amorphous silicon (a-Si:H) material, a nitride-based material, an oxide-based material, a metal material, or a semiconductor material, among other examples.

As indicated by the different patterning and shading of the materials 118 shown in Fig. 1, each material 118 may be different than another material 118 in the photonic waveguide structure 102 (e.g., in terms of material composition). For example, the material 118-1 may be different than at least one of the materials 118-2, 118-3, 118-4. In some implementations, a material 118 may be the same as another material 118 in the photonic waveguide structure 102 (e.g., in terms of material composition). For example, the material 118-1 may be the same as at least one of the materials 118-2, 118-3, or 118-4.

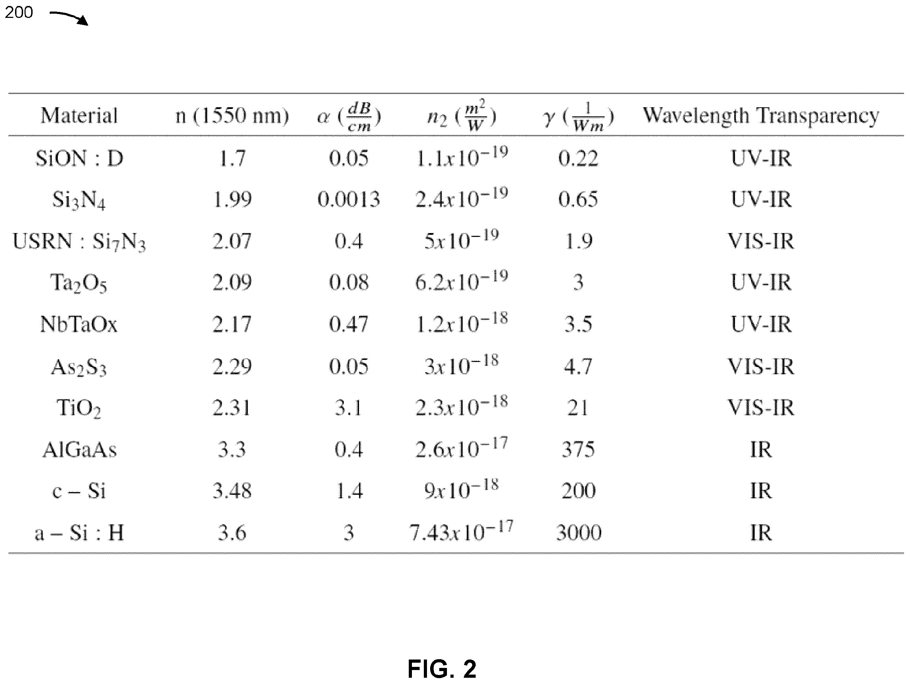

In some implementations, a material 118 of an active structure 108 may have a plurality of optical characteristics, such as one or more particular nonlinear optical characteristics, one or more particular linear optical characteristics, a particular refractive index, and/or a particular spectral range (e.g., that the material 118 may be configured to transmit), among other examples. As further described herein, Fig. 2 shows a table of some optical characteristics, of the plurality of optical characteristics, of example materials 118 of an active structure 108.

The one or more particular nonlinear optical characteristics of a material 118 of an active structure 108 may include, for example, a Kerr coefficient (also referred as $n_2$) that satisfies a Kerr coefficient threshold. That is, the material 118 may have a Kerr coefficient that is greater than or equal to the Kerr coefficient threshold. The Kerr coefficient threshold may be greater than or equal to $5.0 \times 10^{-19}$ meters squared per Watt ( $\frac{m^2}{W}$ ),

$$6.2 \times 10^{-19} \frac{m^2}{W}, 8.0 \times 10^{-19} \frac{m^2}{W},$$

$$1.0 \times 10^{-18} \frac{m^2}{W}, 1.2 \times 10^{-18} \frac{m^2}{W}, \text{ and/or}$$

$$1.4 \times 10^{-18} \frac{m^2}{W}, \text{ and/or } 2.5 \times 10^{-18} \frac{m^2}{W}, \text{ among other}$$

examples. In some implementations, the material 118 may have a Kerr coefficient that is greater than or equal to $5.0 \times 10^{-19} \frac{m^2}{W}$ and less than or equal to $2.5 \times 10^{-18} \frac{m^2}{W}$ . Additionally, or alternatively, one or more particular nonlinear optical characteristics of the material 118 may include, for example, an effective nonlinear parameter (also referred as y) that satisfies an effective nonlinear parameter threshold. That is, the material 118 may have an effective nonlinear parameter that is greater than or equal to the effective nonlinear parameter threshold. The effective nonlinear parameter threshold may be greater than or equal to 1 radian per Watt-meter ( $\frac{1}{Wm}$ ), $2\frac{1}{Wm}$, $3\frac{1}{Wm}$ and/or $3.5\frac{1}{Wm}$ , among other examples. In some implementations, the material 118 may have an effective nonlinear parameter that is greater than or equal to $1\frac{1}{Wm}$ and less than or equal to $3.5\frac{1}{Wm}$ .

The one or more particular linear optical characteristics of the material 118 may include, for example, a propagation loss parameter (also referred to as $\alpha$) that satisfies a propagation loss parameter threshold. That is, the material 118 may have a propagation loss parameter that is less than or equal to the propagation loss parameter threshold. The propagation loss parameter threshold may be less than or equal to 0.08 decibels per centimeter ( $\frac{dB}{cm}$ ), $0.1\frac{dB}{cm}$, $0.2\frac{dB}{cm}$, $0.3\frac{dB}{cm}$, $0.4\frac{dB}{cm}$, $0.47\frac{dB}{cm}$, $0.5\frac{dB}{cm}$, and/or 0.55 dBcm, among other examples. A practical complexity of a photonic waveguide structure (e.g., in terms of including multiple layers that can support different linear and nonlinear optical operations) is limited when a material of an active structure of the photonic waveguide structure has a propagation loss parameter that is greater than the propagation loss parameter threshold. Accordingly, including a material 118 that has a propagation loss parameter that is less than or equal to the propagation loss parameter threshold in the active structure 108 of the photonic waveguide layer 106 enables the photonic waveguide structure 102 to have an increased practical complexity. This therefore enables the photonic waveguide structure 102 to be included in an optical device 100, in which a photonic waveguide structure with less complexity may not be preferred. In some implementations, the material 118 may have a propagation loss parameter that is greater than or equal to $0.08\frac{dB}{cm}$ and less than or equal to $0.55\frac{dB}{cm}$ .

In some implementations, the particular refractive index (also referred to as n) of the material 118 of the active structure 108 may satisfy a refractive index threshold. That is, the material 118 may have a refractive index that is greater than or equal to the refractive index threshold. The refractive index threshold may be greater than or equal to (e.g., for light with a wavelength of 1550 nm) 1.99, 2.00, 2.02, 2.04, 2.07, 2.09, 2.12, and/or 2.17, among other examples. In some implementations, the particular spectral range of the material 118 may be a range of light wavelengths that the material 118 may transmit (e.g., the material 118 may be transparent to, or may provide a transparency window for, light associated with the spectral range). The spectral range may be associated with ultraviolet light through infrared light. For example, the spectral range may include light associated with wavelengths from 350 nm to 5000 nm, from 420 nm to 1600 nm, or another range. As another example, the spectral range may include one or more subranges of light associated with ultraviolet light through infrared light, such as one or more portions of ultraviolet light (e.g., one or more portions of light associated with wavelengths from 100 nm to 399 nm), one or more portions of visible light (e.g., one or more portions of light associated with wavelengths from 400 nm to 699 nm), and/or one or more portions of infrared light (e.g., one or more portions of light associated with wavelengths from 700 nm to 5000 nm).

In some implementations, the photonic waveguide structure 102 may include a first photonic waveguide layer 106, of the plurality of photonic waveguide layers 106, that includes a first active structure 108 associated with one or more particular nonlinear optical characteristics (e.g., a first material 118 of the first active structure 108 may have the one or more particular nonlinear optical characteristics). For example, the first active structure 108 may be associated with an effective non-linear parameter that satisfies the effective nonlinear parameter threshold (described above) and/or may be associated with a Kerr coefficient that satisfies the Kerr coefficient threshold (described above). Additionally, or alternatively, the photonic waveguide structure 102 may include a second photonic waveguide layer 106, of the plurality of photonic waveguide layers 106, that includes a second active structure 108 associated with one or more particular linear optical characteristics (e.g., a second material 118 of the second active structure 108 may have the one or more particular linear optical characteristics). For example, the second active structure 108 may be associated with a propagation loss parameter that satisfies the propagation loss parameter threshold (described above). Accordingly, the first material 118 may be different than the second material 118. For example, the first material 118 may comprise at least a tantalum pentoxide material and the second material 118 may comprise at least a silicon nitride material. In this way, a material 118 that is included in the first active structure 108 may not be included in the second active structure 108 (and vice versa). Alternatively, the first material 118 may be the same as, or similar to, the second material 118. For example, each of the first material 118 and the second material 118 may comprise at least a non-alkali, oxide solution that includes a cation that is niobium. In this way, a material 118 that is included in the first active structure 108 may be included in the second active structure 108.

In some implementations, the first photonic waveguide layer 106 may be disposed over the second photonic waveguide layer 106 in the stack configuration (e.g., over the substrate 104). For example, the first photonic waveguide layer 106 may be the photonic waveguide layer 106-3 and the second photonic waveguide layer 106 may be the photonic waveguide layer 106-1 or the photonic waveguide layer 106-2. Alternatively, the second photonic waveguide layer 106 may be disposed over the first photonic waveguide layer 106 in the stack configuration (e.g., over the substrate 104). For example, the first photonic waveguide layer 106 may be the photonic waveguide layer 106-1 and the second photonic waveguide layer 106 may be the photonic waveguide layer 106-2, the photonic waveguide layer 106-3, or the photonic waveguide layer 106-4.

In some implementations, the photonic waveguide structure 102 may be formed using one or more sputtering processes, such as one or more magnetron sputtering processes, one or more ion-beam sputtering processes, one or more reactive sputtering processes, one or more alternating-current (AC) sputtering processes, and/or one or more direct-current (DC) sputtering processes. For example, the photonic waveguide layer 106-1 may be formed over the substrate using a first set of one or more sputtering processes, the photonic waveguide layer 106-2 may be formed over the substrate using a second set of one or more sputtering processes, the photonic waveguide layer 106-3 may be formed over the substrate using a third set of one or more sputtering processes, and so on. A processing temperature associated with the one or more sputtering processes may satisfy (e.g., may be less than or equal to) a processing temperature threshold. The processing temperature threshold may be less than or equal to 200°C, 250°C, 275°C , and/or 300°C, among other examples. In some implementations, the processing temperature threshold may be less than a temperature associated with affecting the optical characteristics of the active structures 108 of the plurality of photonic waveguide layers 106 (e.g., a temperature that may damage at least one of the active structures 108). In this way, the one or more sputtering processes may be considered to be "low temperature" processes.

Accordingly, at least one of the active structures 108 may comprise an amorphous structure (e.g., because the active structures 108 of the plurality of photonic waveguide layers 106 are formed using the one or more sputtering processes). For example, an active structure 108 may comprise a material 118 that is formed by the one or more sputtering processes to have a non-uniform and/or non-crystalline structure. This may permit the material 118 to have the one or more particular nonlinear optical characteristics described herein.

As indicated above, Fig. 1 is provided as an example. Other examples may differ from what is described with regard to Fig. 1.

Fig. 2 shows a table 200 of some optical characteristics of example materials 118 of an active structure 108 of a photonic waveguide layer 106 described herein. As shown in Fig. 2, the table 200 includes entries for a deuterated silicon oxynitride (SiON:D) material, a silicon nitride ($Si_3N_4$) material, an ultra-silicon-rich nitride (USRN:$Si_7N_3$) material, a tantalum pentoxide ($Ta_2O_5$) material, a non-alkali, oxide solution that includes a cation that is niobium (e.g., that is represented by a niobium tantalum oxide (NbTaOx) solution), an arsenic trisulfide ($As_2S_3$) material, a titanium dioxide ($TiO_2$) material, an aluminum gallium arsenide (AlGaAs) material, a crystalline silicon (c-Si) material, and a hydrogenated amorphous silicon (a-Si:H) material. Each entry indicates a refractive index (also referred to as *n,* for light with a wavelength of 1550 nm), a propagation loss parameter (also referred to as $\alpha$), a Kerr coefficient (also referred as $n_2$), an effective nonlinear parameter (also referred as $\gamma$), and a wavelength transparency (e.g., an indication of whether the material 118 transmits ultraviolet (UV) light, visible (VIS) light, and/or infrared (IR) light).

For example, a photonic waveguide layer 106 may include an active structure 108 that comprises at least a silicon nitride material that has a 1.99 refractive index, a propagation loss parameter of $0.0013\,\dfrac{\mathrm{dB}}{\mathrm{cm}}$ , a Kerr coefficient of $2.4 \times 10^{-19}\,\dfrac{\mathrm{m}^2}{\mathrm{W}}$ , an effective nonlinear parameter of $0.65\,\dfrac{1}{\mathrm{Wm}}$ , and a wavelength transparency for one or more portions of ultraviolet light through infrared light. As another example, a photonic waveguide layer 106 may include an active structure 108 that comprises at least a tantalum pentoxide material that has a 2.09 refractive index, a propagation loss parameter of $0.08 \frac{dB}{cm}$, a Kerr coefficient of $6.2 \times 10^{-19} \frac{m^2}{W}$, an effective nonlinear parameter of $3 \frac{1}{Wm}$, and a wavelength transparency for one or more portions of ultraviolet light through infrared light. In an additional example, a photonic waveguide layer 106 may include an active structure 108 that comprises at least a non-alkali, oxide solution that includes a cation that is niobium that has a 2.17 refractive index, a propagation loss parameter of $0.47 \frac{dB}{cm}$, a Kerr coefficient of $1.2 \times 10^{-18} \frac{m^2}{W}$, an effective nonlinear parameter of $3.5 \frac{1}{Wm}$, and a wavelength transparency for one or more portions of ultraviolet light through infrared light.

As indicated above, Fig. 2 is provided as an example. Other examples may differ from what is described with regard to Fig. 2.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "X material" or "X solution," where X is a chemical composition, such as silicon nitride or niobium tantalum oxide, indicates that at least a threshold percentage of X is included in the X material or X solution. The threshold percentage may be, for example, greater than or equal to 1%, 5%, 10%, 25%, 50%, 75%, 85%, 90%, 95%, and/or 99%. As used herein, when a material or solution is referred to by a specific chemical name or formula, the solution or material may include non-stoichiometric variations of the stoichiometrically exact formula identified by the chemical name.

As used herein, satisfying a threshold may, depending on the context, refer to a value being greater than the threshold, greater than or equal to the threshold, less than the threshold, less than or equal to the threshold, equal to the threshold, not equal to the threshold, or the like.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of"). Further, spatially relative terms, such as "below," "lower," "bottom," "above," "upper," "top," and the like, may be used herein for ease of description to describe one element or feature's relationship to another element(s) or feature(s) as illustrated in the figures. The spatially relative terms are intended to encompass different orientations of the apparatus, device, and/or element in use or operation in addition to the orientation depicted in the figures. The apparatus may be otherwise oriented (rotated 90 degrees or at other orientations) and the spatially relative descriptors used herein may likewise be interpreted accordingly. a non-uniform and/or non-crystalline structure. This may permit the material 118 to have the one or more particular nonlinear optical characteristics described herein.

As indicated above, Fig. 1 is provided as an example. Other examples may differ from what is described with regard to Fig. 1.

Fig. 2 shows a table 200 of some optical characteristics of example materials 118 of an active structure 108 of a photonic waveguide layer 106 described herein. As shown in Fig. 2, the table 200 includes entries for a deuterated silicon oxynitride (SiON:D) material, a silicon nitride ($Si_3N_4$) material, an ultra-silicon-rich nitride (USRN:$Si_7N_3$) material, a tantalum pentoxide ($Ta_2O_5$) material, a non-alkali, oxide solution that includes a cation that is niobium (e.g., that is represented by a niobium tantalum oxide (NbTaOx) solution), an arsenic trisulfide ($As_2S_3$) material, a titanium dioxide ($TiO_2$) material, an aluminum gallium arsenide (AlGaAs) material, a crystalline silicon (c-Si) material, and a hydrogenated amorphous silicon (a-Si:H) material. Each entry indicates a refractive index (also referred to as n, for light with a wavelength of 1550 nm), a propagation loss parameter (also referred to as $\alpha$), a Kerr coefficient (also referred as $n_2$), an effective nonlinear parameter (also referred as $\gamma$), and a wavelength transparency (e.g., an indication of whether the material 118 transmits ultraviolet (UV) light, visible (VIS) light, and/or infrared (IR) light).

For example, a photonic waveguide layer 106 may include an active structure 108 that comprises at least a silicon nitride material that has a 1.99 refractive index, a propagation loss parameter of $0.0013 \frac{dB}{cm}$, a Kerr coefficient of $2.4 \times 10^{-19} \frac{\mathrm{m}^2}{\mathrm{W}}$, an effective non-

linear parameter of $0.65 \frac{1}{\mathrm{Wm}}$, and a wavelength transparency for one or more portions of ultraviolet light through infrared light. As another example, a photonic waveguide layer 106 may include an active structure 108 that comprises at least a tantalum pentoxide material that has a 2.09 refractive index, a propagation loss parameter of $0.08 \frac{\mathrm{dB}}{\mathrm{cm}}$, a Kerr coefficient of $6.2 \times 10^{-19} \frac{\mathrm{m}^2}{\mathrm{W}}$, an

effective nonlinear parameter of $3 \frac{1}{\mathrm{Wm}}$, and a wave-

length transparency for one or more portions of ultraviolet light through infrared light. In an additional example, a photonic waveguide layer 106 may include an active structure 108 that comprises at least a non-alkali, oxide solution that includes a cation that is niobium that has a 2.17 refractive index, a propagation loss parameter of

$0.47 \frac{\mathrm{dB}}{\mathrm{cm}}$, a Kerr coefficient of $1.2 \times 10^{-18} \frac{\mathrm{m}^2}{\mathrm{W}}$, an

effective nonlinear parameter of $3.5 \frac{1}{\mathrm{Wm}}$, and a wave-

length transparency for one or more portions of ultraviolet light through infrared light.

As indicated above, Fig. 2 is provided as an example. Other examples may differ from what is described with regard to Fig. 2.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "X material" or "X solution," where X is a chemical composition, such as silicon nitride or niobium tantalum oxide, indicates that at least a threshold percentage of X is included in the X material or X solution. The threshold percentage may be, for example, greater than or equal to 1%, 5%, 10%, 25%, 50%, 75%, 85%, 90%, 95%, and/or 99%. As used herein, when a material or solution is referred to by a specific chemical name or formula, the solution or material may include non-stoichiometric variations of the stoichiometrically exact formula identified by the chemical name.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of"). Further, spatially relative terms, such as "below," "lower," "bottom," "above," "upper," "top," and the like, may be used herein for ease of description to describe one element or feature's relationship to another element(s) or feature(s) as illustrated in the figures. The spatially relative terms are intended to encompass different orientations of the apparatus, device, and/or element in use or operation in addition to the orientation depicted in the figures. The apparatus may be otherwise oriented (rotated 90 degrees or at other orientations) and the spatially relative descriptors used herein may likewise be interpreted accordingly.

**Claims**

1.  A photonic waveguide structure (102), comprising:
    at least four photonic waveguide layers (106-1, 106-2, 106-3, 106-4) disposed in a stack configuration, wherein each photonic waveguide layer comprises an active structure (108) and one or more cladding structures (110), and wherein:

    a first photonic waveguide layer, of the at least four photonic waveguide layers, includes a first active structure associated with a Kerr coefficient that satisfies a Kerr coefficient threshold, wherein the Kerr coefficient threshold is greater than or equal to $5.0 \times 10^{-19}$ meters squared per Watt; and

a second photonic waveguide layer, of the at least four photonic waveguide layers, includes a second active structure associated with a propagation loss parameter that satisfies a propagation loss parameter threshold, wherein the propagation loss parameter threshold is less than or equal to 0.55 decibels per centimeter.

2. The photonic waveguide structure of claim 1, wherein the Kerr coefficient threshold is greater than or equal to $1 \times 10^{-18}$ meters squared per Watt.

3. The photonic waveguide structure of claim 1 or claim 2, wherein the propagation loss parameter threshold is less than or equal to 0.5 decibels per centimeter.

4. The photonic waveguide structure of any one of the preceding claims, wherein the first active structure and the second active structure are each configured to transmit light with wavelengths from 420 nanometers (nm) to 1600 nm.

5. The photonic waveguide structure of any one of the preceding claims, wherein respective thicknesses of the first active structure and the second active structure are greater than or equal to 500 nanometers.

6. The photonic waveguide structure of any one of the preceding claims, wherein the first photonic waveguide layer and the second photonic waveguide layer are formed using one or more sputtering processes.

7. The photonic waveguide structure of any one of the preceding claims, wherein the at least four photonic waveguide layers are disposed in the stack configuration over a substrate,

wherein the second photonic waveguide layer is disposed over the first photonic waveguide layer in the stack configuration, and
wherein a third photonic waveguide layer, of the at least four photonic waveguide layers, is disposed over the second photonic waveguide layer in the stack configuration.

8. An optical device (100), comprising a photonic waveguide structure (102) of claim 1.

9. The optical device of claim 8 wherein the Kerr coefficient threshold is greater than or equal to $6.2 \times 10^{-19}$ meters squared per Watt.

10. The optical device of claim 8 or claim 9, wherein the propagation loss parameter threshold is less than or equal to 0.1 decibels per centimeter.

11. The optical device of any one of claims 8-10, wherein the first active structure and the second active structure are each configured to transmit light with wavelengths from 350 nanometers (nm) to 5000 nm.

12. The optical device of any one of claims 8-11, wherein a material included in the first active structure either is included in the second active structure.

13. The optical device of any one of claims 8-12, wherein respective thicknesses of the first active structure and the second active structure are greater than or equal to 500 nanometers.

14. The optical device of any one of claims 9-13, wherein the first photonic waveguide layer and the second photonic waveguide layer are formed using one or more sputtering processes.

**Patentansprüche**

1. Eine photonische Wellenleiterstruktur (102), die Folgendes beinhaltet:
mindestens vier photonische Wellenleiterschichten (106-1, 106-2, 106-3, 106-4), die in einer Stapelkonfiguration angeordnet sind, wobei jede photonische Wellenleiterschicht eine aktive Struktur (108) und eine oder mehrere Mantelstrukturen (110) beinhaltet, und wobei:

eine erste photonische Wellenleiterschicht der mindestens vier photonischen Wellenleiterschichten eine erste aktive Struktur umfasst, die mit einem Kerr-Koeffizienten assoziiert ist, der eine Kerr-Koeffizientenschwelle erfüllt, wobei die Kerr-Koeffizientenschwelle größer als oder gleich $5,0 \times 10^{-19}$ Quadratmeter pro Watt ist; und
eine zweite photonische Wellenleiterschicht der mindestens vier photonischen Wellenleiterschichten eine zweite aktive Struktur umfasst, die mit einem Ausbreitungsverlustparameter assoziiert ist, der eine Ausbreitungsverlustparameterschwelle erfüllt, wobei die Ausbreitungsverlustparameterschwelle kleiner als oder gleich 0,55 Dezibel pro Zentimeter ist.

2. Photonische Wellenleiterstruktur gemäß Anspruch 1, wobei die Kerr-Koeffizientenschwelle größer als oder gleich $1 \times 10^{-18}$ Quadratmeter pro Watt ist.

3. Photonische Wellenleiterstruktur gemäß Anspruch 1 oder Anspruch 2, wobei die Ausbreitungsverlustparameterschwelle kleiner als oder gleich 0,5 Dezibel pro Zentimeter ist.

4. Photonische Wellenleiterstruktur gemäß einem der vorhergehenden Ansprüche, wobei die erste aktive Struktur und die zweite aktive Struktur jeweils konfiguriert sind, um Licht mit Wellenlängen von 420 Nanometern (nm) bis 1600 nm zu übertragen.

5. Photonische Wellenleiterstruktur gemäß einem der vorhergehenden Ansprüche, wobei jeweilige Dicken der ersten aktiven Struktur und der zweiten aktiven Struktur größer als oder gleich 500 Nanometer sind.

6. Photonische Wellenleiterstruktur gemäß einem der vorhergehenden Ansprüche, wobei die erste photonische Wellenleiterschicht und die zweite photonische Wellenleiterschicht unter Verwendung eines oder mehrerer Sputterprozesse gebildet werden.

7. Photonische Wellenleiterstruktur gemäß einem der vorhergehenden Ansprüche, wobei die mindestens vier photonischen Wellenleiterschichten in der Stapelkonfiguration über einem Substrat angeordnet sind,

wobei die zweite photonische Wellenleiterschicht in der Stapelkonfiguration über der ersten photonischen Wellenleiterschicht angeordnet ist, und
wobei eine dritte photonische Wellenleiterschicht der mindestens vier photonischen Wellenleiterschichten in der Stapelkonfiguration über der zweiten photonischen Wellenleiterschicht angeordnet ist.

8. Eine optische Vorrichtung (100), die eine photonische Wellenleiterstruktur (102) gemäß Anspruch 1 beinhaltet.

9. Optische Vorrichtung gemäß Anspruch 8, wobei die Kerr-Koeffizientenschwelle größer als oder gleich $6,2 \times 10^{-19}$ Quadratmeter pro Watt ist.

10. Optische Vorrichtung gemäß Anspruch 8 oder Anspruch 9, wobei die Ausbreitungsverlustparameterschwelle kleiner als oder gleich 0,1 Dezibel pro Zentimeter ist.

11. Optische Vorrichtung gemäß einem der Ansprüche 8-10, wobei die erste aktive Struktur und die zweite aktive Struktur jeweils konfiguriert sind, um Licht mit Wellenlängen von 350 Nanometern (nm) bis 5000 nm zu übertragen.

12. Optische Vorrichtung gemäß einem der Ansprüche 8-11, wobei ein Material, das in der ersten aktiven Struktur umfasst ist, in der zweiten aktiven Struktur enthalten ist.

13. Optische Vorrichtung gemäß einem der Ansprüche 8-12, wobei jeweilige Dicken der ersten aktiven Struktur und der zweiten aktiven Struktur größer als oder gleich 500 Nanometer sind.

14. Optische Vorrichtung gemäß einem der Ansprüche 9-13, wobei die erste photonische Wellenleiterschicht und die zweite photonische Wellenleiterschicht unter Verwendung eines oder mehrerer Sputterprozesse gebildet werden.

**Revendications**

1. Une structure formant guide d'onde photonique (102), comprenant :
au moins quatre couches guides d'onde photoniques (106-1, 106-2, 106-3, 106-4) disposées en une configuration d'empilement, où chaque couche guide d'onde photonique comprend une structure active (108) et une ou plusieurs structures formant gaine (110), et où :

une première couche guide d'onde photonique, parmi les au moins quatre couches guides d'onde photoniques, inclut une première structure active associée à un coefficient de Kerr qui satisfait un seuil de coefficient de Kerr, où le seuil de coefficient de Kerr est supérieur ou égal à $5,0 \times 10^{-19}$ mètres par Watt, au carré ; et
une deuxième couche guide d'onde photonique, parmi les au moins quatre couches guides d'onde photoniques, inclut une deuxième structure active associée à un paramètre d'affaiblissement de propagation qui satisfait un seuil de paramètre d'affaiblissement de propagation, où le seuil de paramètre d'affaiblissement de propagation est inférieur ou égal à 0,55 décibel par centimètre.

2. La structure formant guide d'onde photonique de la revendication 1, où le seuil de coefficient de Kerr est supérieur ou égal à $1 \times 10^{-18}$ mètres par Watt, au carré.

3. La structure formant guide d'onde photonique de la revendication 1 ou de la revendication 2, où le seuil de paramètre d'affaiblissement de propagation est inférieur ou égal à 0,5 décibel par centimètre.

4. La structure formant guide d'onde photonique de l'une quelconque des revendications précédentes, où la première structure active et la deuxième structure active sont chacune configurées pour transmettre de la lumière avec des longueurs d'onde allant de 420 nanomètres (nm) à 1 600 nm.

5.  La structure formant guide d'onde photonique de l'une quelconque des revendications précédentes, où des épaisseurs respectives de la première structure active et de la deuxième structure active sont supérieures ou égales à 500 nanomètres.

6.  La structure formant guide d'onde photonique de l'une quelconque des revendications précédentes, où la première couche guide d'onde photonique et la deuxième couche guide d'onde photonique sont formées en utilisant un ou plusieurs procédés de pulvérisation cathodique.

7.  La structure formant guide d'onde photonique de l'une quelconque des revendications précédentes, où les au moins quatre couches guides d'onde photoniques sont disposées dans la configuration d'empilement par-dessus un substrat,

    où la deuxième couche guide d'onde photonique est disposée par-dessus la première couche guide d'onde photonique dans la configuration d'empilement, et
    où une troisième couche guide d'onde photonique, parmi les au moins quatre couches guides d'onde photoniques, est disposée par-dessus la deuxième couche guide d'onde photonique dans la configuration d'empilement.

8.  Un dispositif optique (100), comprenant une structure formant guide d'onde photonique (102) de la revendication 1.

9.  Le dispositif optique de la revendication 8 où le seuil de coefficient de Kerr est supérieur ou égal à $6,2 \times 10^{-19}$ mètres par Watt, au carré.

10. Le dispositif optique de la revendication 8 ou de la revendication 9, où le seuil de paramètre d'affaiblissement de propagation est inférieur ou égal à 0,1 décibel par centimètre.

11. Le dispositif optique de l'une quelconque des revendications 8 à 10, où la première structure active et la deuxième structure active sont chacune configurées pour transmettre de la lumière avec des longueurs d'onde allant de 350 nanomètres (nm) à 5 000 nm.

12. Le dispositif optique de l'une quelconque des revendications 8 à 11, où un matériau inclus dans la première structure active est inclus dans la deuxième structure active.

13. Le dispositif optique de l'une quelconque des revendications 8 à 12, où des épaisseurs respectives de la première structure active et de la deuxième structure active sont supérieures ou égales à 500 nanomètres.

14. Le dispositif optique de l'une quelconque des revendications 9 à 13, où la première couche guide d'onde photonique et la deuxième couche guide d'onde photonique sont formées en utilisant un ou plusieurs procédés de pulvérisation cathodique.

FIG. 1

100

Photonic Waveguide Structure 102

Photonic Waveguide Layer 106-4
Photonic Waveguide Layer 106-3
Photonic Waveguide Layer 106-2
Photonic Waveguide Layer 106-1

Cladding Structure 110-4B
Active Structure 108-4
116-4
112-4
Material 118-4

Cladding Structure 110-4A
Cladding Structure 110-3B
Active Structure 108-3
116-3
112-3
Material 118-3

Cladding Structure 110-3A
Cladding Structure 110-2B
Active Structure 108-2
116-2
112-2
Material 118-2

Cladding Structure 110-2A
Cladding Structure 110-1B
Active Structure 108-1
116-1
112-1
Material 118-1

Cladding Structure 110-1A
Substrate 104
114

200

| Material | n (1550 nm) | $\alpha\ (\frac{dB}{cm})$ | $n_2\ (\frac{m^2}{W})$ | $\gamma\ (\frac{1}{Wm})$ | Wavelength Transparency |
|---|---|---|---|---|---|
| SiON : D | 1.7 | 0.05 | $1.1x10^{-19}$ | 0.22 | UV-IR |
| $Si_3N_4$ | 1.99 | 0.0013 | $2.4x10^{-19}$ | 0.65 | UV-IR |
| USRN : $Si_7N_3$ | 2.07 | 0.4 | $5x10^{-19}$ | 1.9 | VIS-IR |
| $Ta_2O_5$ | 2.09 | 0.08 | $6.2x10^{-19}$ | 3 | UV-IR |
| NbTaOx | 2.17 | 0.47 | $1.2x10^{-18}$ | 3.5 | UV-IR |
| $As_2S_3$ | 2.29 | 0.05 | $3x10^{-18}$ | 4.7 | VIS-IR |
| $TiO_2$ | 2.31 | 3.1 | $2.3x10^{-18}$ | 21 | VIS-IR |
| AlGaAs | 3.3 | 0.4 | $2.6x10^{-17}$ | 375 | IR |
| c − Si | 3.48 | 1.4 | $9x10^{-18}$ | 200 | IR |
| a − Si : H | 3.6 | 3 | $7.43x10^{-17}$ | 3000 | IR |

**FIG. 2**

EP 4 177 649 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020026000 A1